# FASCICULE DE BREVET EUROPEEN

(11) **EP 3 090 242 B1**
(45) Date de publication et mention de la délivrance du brevet: **01.11.2023**
(21) Numéro de dépôt: 14828252.8
(22) Date de dépôt: 19.12.2014
(51) Int. Cl.: G01L 19/14, G01L 9/00

(54) **DISPOSITIF DE MESURE DE PRESSION**
DRUCKMESSUNG VORRICHTUNG
DEVICE FOR MEASURING PRESURE

(30) Priorité: 31.12.2013 FR 1363750
(43) Date de publication de la demande: 09.11.2016
(73) Titulaire: Valeo Systèmes de Contrôle Moteur, 95800 Cergy Saint Christophe (FR)
(72) Inventeur: ZAKRZEWSKI, Piotr, F-78260 Acheres (FR); GELEZ, Nicolas, F-78230 Le Pecq (FR)
(74) Mandataire: Valeo Powertrain Systems
(86) Numéro de dépôt international: PCT/FR2014/053451
(87) Numéro de publication internationale: WO 2015/101733

(56) Documents cités:
- DE-A1- 10 049 996
- DE-A1- 10 049 996
- US-A- 3 568 124
- US-A- 3 568 124
- US-A- 5 481 905
- US-A- 5 481 905
- US-A- 6 009 757
- US-A- 6 009 757

## Description

### Domaine technique

L'invention concerne un dispositif de mesure de pression, en particulier destiné à un véhicule automobile.

### Etat de la technique

Un dispositif de mesure de pression comporte classiquement un capteur de pression et un circuit de mesure. Le capteur de pression comporte classiquement, et suivant l'utilisation, un support et une membrane céramique montée sur le support de manière à se déformer sous l'effet de la pression ambiante. Le circuit de mesure comporte classiquement une jauge de contrainte fixée sur la membrane céramique et un composant électronique déporté connecté électriquement à ladite jauge de contrainte. La jauge de contrainte est disposée sur la membrane céramique de manière à présenter une propriété électrique, par exemple une résistance, variable en fonction de la position de ladite membrane. Le composant électronique est configuré de manière à traiter un signal reçu de ladite jauge de contrainte afin de fournir une évaluation de la pression correspondante.

Dans le domaine de l'électronique automobile, il existe un besoin permanent pour un dispositif de mesure de pression qui soit plus compact et moins coûteux à fabriquer.

Un but de la présente invention est de répondre, au moins partiellement, à ce besoin. Le document US 5 481 905A divulgue un dispositif de mesure d'une pression extérieure.

### Résumé de l'invention

Selon l'invention, on atteint ce but au moyen d'un dispositif de mesure d'une pression extérieure tel que défini dans la revendication 1.

Comme on le verra plus en détail dans la suite de la description, le support sert donc pour fixer à la fois la membrane et le composant électronique. Le dispositif de mesure est donc plus compact. De plus, il comporte un nombre de pièces réduit, ce qui limite son coût de fabrication.

Un dispositif de mesure selon l'invention peut encore comporter une ou plusieurs des caractéristiques optionnelles suivantes :
- le connecteur souple est choisi parmi un ressort, un fil et une languette élastique,
- le support est en un matériau céramique,
- le capteur de pression comporte une couche de verre protégeant, de préférence isolant de l'extérieur, ladite membrane céramique,
- le support comporte une cavité dans laquelle la membrane céramique peut se déformer,
- le support et la membrane céramique définissent ensemble une chambre interne hermétique,
- la membrane céramique est adaptée pour des mesures d'une pression comprise entre 0 et 300 bar.
- le traitement comprend une transformation du signal ou un filtrage, par exemple pour assurer une protection électromagnétique.

L'invention concerne également un appareil comportant un dispositif de mesure selon l'invention, ledit appareil étant de préférence choisi dans le groupe constitué par un moteur, en particulier thermique, une boîte de vitesses, un dispositif de freinage, un climatiseur, un réfrigérateur et un congélateur. Le capteur de pression peut être par exemple en contact avec de l'huile, par exemple si l'appareil est une boîte de vitesses ou un moteur, ou avec un fluide frigorigène, par exemple si l'appareil est choisi parmi un climatiseur, un congélateur et un réfrigérateur, ou avec un liquide de freins si l'appareil est un dispositif de freinage. Un dispositif de mesure selon l'invention peut être en particulier utilisé dans le cadre d'un asservissement et/ou assurer des fonctions de sécurité.

### Brève description des figures

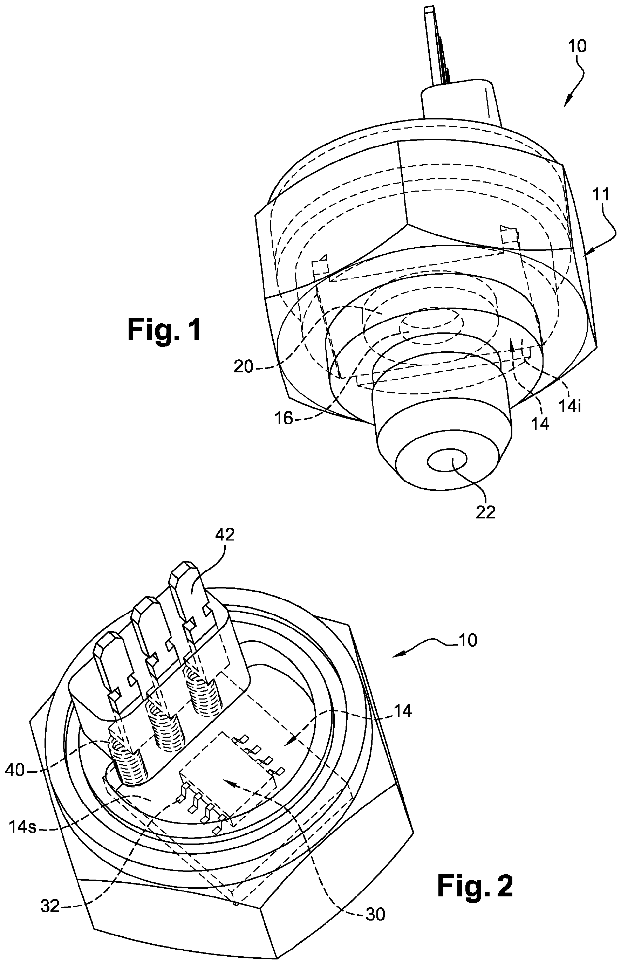

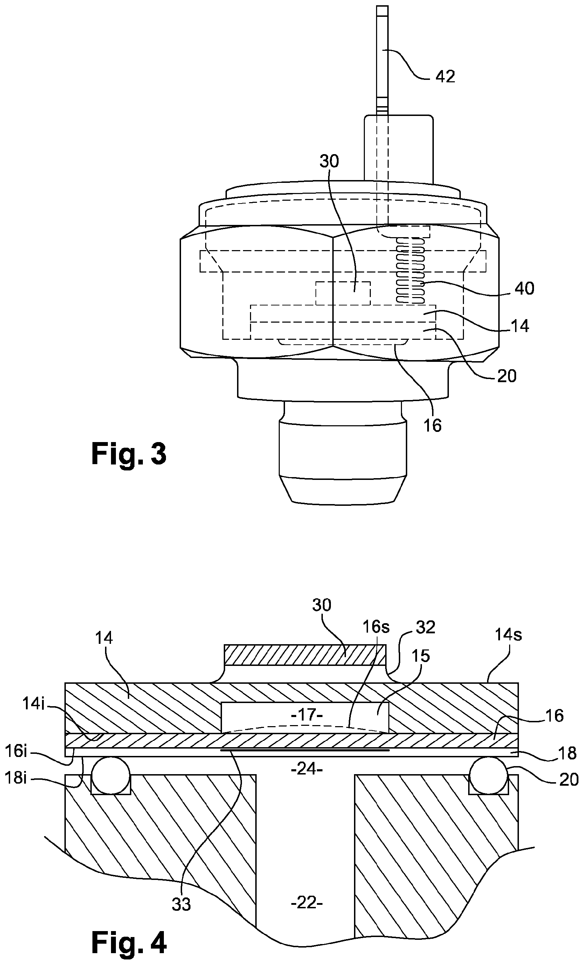

D'autres caractéristiques et avantages de la présente invention apparaîtront encore à la lecture de la description détaillée qui va suivre et à l'examen du dessin annexé dans lequel les figures représentent en perspective et en transparence (figures 1 à 3) ou partiellement en coupe transversale et schématique (figure 4) un mode de réalisation d'un dispositif de mesure selon l'invention.

### Définitions

Les adjectifs « supérieur » et « inférieur » sont utilisés, de manière non limitative, en regard de la position du dispositif représenté sur la figure 1 ou sur la figure 4.

Sauf indication contraire, par « comportant un » ou « comprenant un », on entend « comportant au moins un ».

### Description détaillée

Comme représenté sur les figures, un dispositif de mesure de pression 10 selon l'invention comporte un carter 11, ainsi qu'un capteur de pression et un circuit de mesure logés dans le carter 11.

Le capteur de pression comporte un support 14 et une membrane 16 en un matériau céramique.

Le support 14 est une plaquette d'épaisseur sensiblement constante, qui présente, vue de face, une forme sensiblement rectangulaire. Il présente une face supérieure 14s et une face inférieure 14i.

L'épaisseur du support est de préférence comprise entre 1 et 5mm. La largeur du support est de préférence comprise entre 8 et 16 mm. La longueur du support est de préférence comprise entre 10 et 20 mm.

Le support 14 peut être en un matériau choisi parmi les matériaux céramiques, et de préférence parmi les matériaux céramiques à base de poudre d'alumine, et par exemple une céramique monolithique.

De préférence, le support 14 est monobloc.

De préférence la face inférieure 14i présente une cavité 15, de préférence cylindrique de révolution, dans laquelle la membrane 16 peut se déformer sous l'effet d'une augmentation de la pression extérieure.

La membrane 16 sensiblement plane, de préférence discoïdale, présente une face supérieure 16s et une face inférieure 16i.

La membrane 16 peut être en un matériau choisi parmi les matériaux céramiques, et de préférence parmi les matériaux céramiques à base de poudre d'alumine, et par exemple une céramique monolithique.

La membrane 16 présente de préférence une épaisseur comprise entre 0,15 et 0,4 mm.

De préférence, la membrane 16 est isolée de l'extérieur par une couche de verre 18, qui la protège de l'environnement extérieur, tout en autorisant sa déformation sous l'effet de la pression extérieure. De préférence, la couche de verre s'étend sur une partie de la surface de la membrane 16 et définit ainsi une surface en contact avec la pression extérieure à mesurer.

Le bord de la membrane 16 est fixé, par exemple collé, de manière étanche, sur la face inférieure 14i du support. La membrane 16 obture la cavité 15 de manière à définir avec le support une chambre interne 17 hermétique, étanche au fluide dont on cherche à mesurer la pression, dans laquelle règne une « pression intérieure ». La face supérieure 16s de la membrane 16 subit ainsi ladite pression intérieure.

La membrane est également en contact, sur son autre face, avec un bourrelet 20 annulaire permettant d'assurer l'étanchéité du dispositif. Le bourrelet 20 présente de préférence une épaisseur supérieure à 1,5 mm de manière à écarter la membrane 16 de la face inférieure 14i du support 14, permettant ainsi sa libre déformation sous l'effet de la pression extérieure. La fonction d'étanchéité est assurée par la compression du bourrelet.

Le bourrelet 20 peut être venu de matière avec le support 14.

Le bourrelet 20 peut être par exemple en un matériau dont la composition chimique peut varier en fonction du fluide ciblé et des efforts de compression admissibles et nécessaire pour garantir l'étanchéité. Le matériau peut ainsi être choisi parmi les élastomères, et par exemple le caoutchouc nitryle hydrogéné ou les élastomères acryliques.

L'ensemble est configuré de façon à ce que l'effort engendré par le bourrelet lors de sa compression ne vienne pas déformer la membrane et donc ne fausse pas la mesure.

Le carter 11 définit un conduit 22 mettant en communication de fluide l'extérieur et la face inférieure 18i de la couche de verre 18, (ou si cette couche de verre est absente, la face inférieure 16i de la membrane 16), de sorte que ladite membrane subisse la pression ambiante, ou « pression extérieure ».

De préférence, le dispositif de mesure comporte un joint ou bourrelet 20, interposé de manière étanche entre le carter 11 d'une part et le support 14 ou la couche de verre 18, comme représenté, ou la membrane 16 d'autre part, pour définir une chambre externe 24 dans laquelle débouche le conduit 22.

Sous l'effet d'une variation de la pression extérieure, la membrane 16 peut donc se déformer, en se bombant, à la manière d'une peau fixée sur une caisse d'un tambour.

La section du passage du conduit 22 est classiquement comprise entre 1,5 et 5 mm.

Le circuit de mesure comporte un composant électronique 30 fixé, par l'intermédiaire de pattes 32, sur la face supérieure 14s, du support 14, opposée à la face inférieure 14i. Le composant électronique 30 est connecté électriquement à une jauge de contrainte 33 fixée sur la membrane 16, de manière qu'un courant électrique puisse circuler entre le composant électronique 30 et ladite jauge de contrainte.

Une jauge de contrainte a la particularité de présenter une propriété électrique, par exemple une résistance électrique ou une capacité électrique, qui dépend de sa géométrie. En particulier, lorsqu'elle est fixée sur une membrane susceptible de se déformer, sa géométrie peut varier sous l'effet de cette déformation.

Le composant électronique 30 peut en particulier être configuré pour transformer le signal électrique en provenance de la jauge de contrainte 33 en une information correspondant à la pression extérieure ayant conduit à la déformation de ladite jauge de contrainte. Il peut être également configuré pour assurer un traitement de ce signal afin de protéger électromagnétiquement l'environnement du dispositif de mesure.

Le circuit de mesure comporte également trois ressorts hélicoïdaux 40 (non représentés sur la figure 4) en appui sur la face supérieure 14s du support, des pistes, non représentées, assurant une connexion électrique entre chacun des ressorts 40 et le composant électronique 30. L'extrémité libre d'un ressort 40 est fixée à une broche 42 elle-même fixée sur le carter 11, et faisant saillie dudit carter 11. Les broches 42 permettent une connexion avec un appareil électrique extérieur, par exemple pour assurer une alimentation du dispositif de mesure en énergie et/ou une communication vers l'extérieur des résultats de la mesure.

De préférence, la connexion électrique entre une broche 42 et une patte 32 du composant électronique 30 est assurée exclusivement par les ressorts et éventuellement des pistes courant sur la face supérieure du support 14.

Selon l'invention, un ressort 40 est recouvert d'une sous-couche de nickel elle-même recouverte d'une couche d'or. Avantageusement, il est ainsi possible de limiter, voire d'éviter la corrosion par frettage et de garantir une bonne conductivité électrique.

Des connecteurs souples autres qu'un ressort 40 peuvent être envisagés pour établir la connexion électrique entre une broche 42 et le composant électronique 30, par exemple un ressort à lames ou un fil. Le connecteur souple peut également prendre la forme de languettes élastiques.

La mise en oeuvre d'un connecteur souple permet avantageusement d'absorber la différence de dilatation thermique entre le support 14, de préférence en un matériau céramique, et les broches 42, classiquement métalliques, et donc limite le risque de rupture de la connexion électrique.

Avantageusement, un dispositif de mesure selon l'invention est particulièrement bien adapté dans des applications dans lesquelles il est soumis à des vibrations et à des variations de températures, et en particulier dans des applications automobiles dans lesquelles il peut être soumis à des températures variant entre -40°C et +160°C. En particulier, une soudure résisterait mal à de telles variations de température.

Un dispositif de mesure selon l'invention peut être notamment utilisé dans un capteur de pression d'huile d'une boîte de vitesses, dans un climatiseur, un congélateur ou un réfrigérateur, afin de mesurer la pression d'un fluide frigorigène, dans un dispositif de freinage, en particulier pour mesurer la pression du liquide de frein, ou dans un moteur, pour mesurer la pression d'huile dans ledit moteur.

Le fonctionnement du dispositif de mesure représenté est le suivant :
Les broches 42 sont connectées à une source d'alimentation électrique et/ou à un appareil ayant besoin de recevoir une mesure de pression.

En position de service, le fluide environnant le dispositif de mesure pénètre à l'intérieur de la chambre externe 24 par l'intermédiaire du conduit 22. La pression de ce fluide s'exerce alors sur la membrane 16, éventuellement par l'intermédiaire de la couche de verre. Le joint 20 évite que ce fluide n'entre en contact avec le support 14 et/ou avec le composant électronique 30 et/ou avec les connecteurs souples, en l'occurrence les ressorts 40.

Sous l'effet d'une variation de pression du fluide, la membrane 16, dont le bord périphérique est fixé sur le rebord de la cavité 15, se bombe vers le support 14, à l'intérieur de la cavité, ou vers le conduit 22, selon que la pression extérieure est supérieure ou inférieure à la pression intérieure respectivement. Cette déformation modifie la géométrie de la jauge de contrainte fixée sur la membrane 16. Sur la figure 4, le trait interrompu représente de façon exagérée la position de la surface supérieure 16s de la membrane sous l'effet d'une pression extérieure supérieure à la pression intérieure. Le circuit électrique passant par le composant électronique 30 et par la jauge de contrainte 33 présente donc un comportement variable en fonction de la pression extérieure. Par exemple, la résistance électrique de la jauge de contrainte peut être modifiée, ce qui peut se traduire par une réduction de l'intensité électrique circulant dans le circuit électrique. Le composant électronique 30 est configuré pour déterminer, par exemple au moyen d'un modèle, une évaluation de la pression extérieure en fonction du comportement dudit circuit électrique. Cette information peut être transmise, par l'intermédiaire des broches 42, à tout appareil, par exemple pour assurer une fonction de sécurité (par exemple pour désactiver l'appareil en cas de surpression), ou pour assurer un réglage particulier, par exemple dans le cadre d'une boucle d'asservissement.

Sous l'effet d'une élévation de la température, la longueur de broche 42 peut augmenter. Les ressorts 40 permettent d'absorber cette augmentation de la longueur, de manière à ce qu'elle n'interagisse sensiblement pas avec le support 14.

Comme cela apparaît clairement à présent, un dispositif de mesure selon la présente invention permet avantageusement, à un coût réduit, une mesure de la pression extérieure avec un nombre de pièces limité. En outre, il autorise un fonctionnement dans des conditions de température très différentes.

Bien entendu, la présente invention n'est pas limitée au mode de réalisation décrit et représenté, fourni à titre d'exemple illustratif.

## Revendications

1. Dispositif de mesure d'une pression extérieure comportant :
- un capteur de pression comportant un support (14) et une membrane céramique (16) montée sur le support de manière à se déformer sous l'effet d'une évolution de la pression extérieure, et
- un circuit de mesure comportant une jauge de contrainte (33) fixée sur la membrane céramique de manière à présenter une propriété électrique variable en fonction de la position de ladite membrane, et un composant électronique (30) connecté électriquement à ladite jauge de contrainte et configuré pour traiter un signal reçu de ladite jauge de contrainte,
le dispositif étant **caractérisé en ce que** le composant électronique est fixé sur le support et **en ce que** qu'il comporte une broche de connexion (42) reliée au support par l'intermédiaire d'un connecteur souple (40), le connecteur souple étant un ressort hélicoïdale revêtu d'une couche d'or, une sous-couche de nickel s'étendant entre le ressort et la couche d'or, assurant une connexion électrique entre ledit composant électronique et ladite broche.

2. Dispositif de mesure selon l'une quelconque des revendications précédentes, **caractérisé par le fait que** le support est en un matériau céramique.

3. Dispositif de mesure selon l'une quelconque des revendications précédentes, **caractérisé par le fait que** le capteur de pression comporte une couche de verre (18) protégeant, de préférence isolant, de l'extérieur ladite membrane céramique.

4. Dispositif de mesure selon l'une quelconque des revendications précédentes, **caractérisé par le fait que** le support et la membrane céramique définissent ensemble une chambre interne (17) hermétique.

5. Appareil comportant un dispositif de mesure selon l'une quelconque des revendications précédentes, choisi dans le groupe constitué par un moteur, en particulier thermique, une boîte de vitesses, un dispositif de freinage, un climatiseur, un réfrigérateur et un congélateur.

## Patentansprüche

1. Vorrichtung zur Messung eines Außendrucks, die Folgendes umfasst:
- einen Drucksensor, der einen Träger (14) und eine keramische Membran (16), die so an dem Träger angebracht ist, dass sie sich unter Einwirkung einer Änderung des Außendrucks verformt, umfasst, und
- eine Messschaltung, die einen Dehnungsmessstreifen (33), der so an der keramischen Membran befestigt ist, dass er in Abhängigkeit von der Position der Membran eine veränderliche elektrische Eigenschaft aufweist, und eine elektronische Komponente (30), die mit dem Dehnungsmessstreifen elektrisch verbunden und dazu konfiguriert ist, ein von dem Dehnungsmessstreifen empfangenes Signal zu verarbeiten, umfasst,
wobei die Vorrichtung **dadurch gekennzeichnet ist, dass** die elektronische Komponente an dem Träger befestigt ist und dass sie einen Verbindungsstift (42) umfasst, der mittels eines flexiblen Verbinders (40) mit dem Träger verbunden ist, wobei der flexible Verbinder eine Schraubenfeder ist, die mit einer Goldschicht beschichtet ist, wobei sich zwischen der Feder und der Goldschicht eine Unterschicht aus Nickel erstreckt, die eine elektrische Verbindung zwischen der elektronischen Komponente und dem Stift sicherstellt.

2. Messvorrichtung nach einem beliebigen der vorhergehenden Ansprüche, **dadurch gekennzeichnet, dass** der Träger aus einem keramischen Material besteht.

3. Messvorrichtung nach einem beliebigen der vorhergehenden Ansprüche, **dadurch gekennzeichnet, dass** der Drucksensor eine Glasschicht (18) umfasst, die die keramische Membran von außen schützt, vorzugsweise isoliert.

4. Messvorrichtung nach einem beliebigen der vorhergehenden Ansprüche, **dadurch gekennzeichnet, dass** der Träger und die keramische Membran zusammen eine hermetische Innenkammer (17) definieren.

5. Apparat, der eine Messvorrichtung nach einem beliebigen der vorhergehenden Ansprüche umfasst und aus der Gruppe ausgewählt ist, die aus einem Motor, insbesondere einem Verbrennungsmotor, einem Schaltgetriebe, einer Bremsvorrichtung, einer Klimaanlage, einem Kühlschrank und einem Tiefkühlschrank besteht.

## Claims

1. Device for measuring an external pressure comprising:
- a pressure sensor comprising a support (14) and a ceramic membrane (16) mounted on the support so as to be deformed under the effect of a change of external pressure, and
- a measurement circuit comprising a strain gauge (33) fixed to the ceramic membrane so as to exhibit an electrical property that is variable as a function of the position of said membrane, and an electronic component (30) connected electrically to said strain gauge and configured to process a signal received from said strain gauge,
the device being **characterized in that** the electronic component is fixed to the support and **in that** it comprises a connection pin (42) linked to the support via a flexible connector (40), the flexible connector being a helical spring coated with a layer of gold, a sublayer of nickel extending between the spring and the layer of gold, ensuring an electrical connection between said electronic component and said pin.

2. Measurement device according to any one of the preceding claims, **characterized in that** the support is made of a ceramic material.

3. Measurement device according to any one of the preceding claims, **characterized in that** the pressure sensor comprises a layer of glass (18) protecting, preferably insulating, said ceramic membrane from the outside.

4. Measurement device according to any one of the preceding claims, **characterized in that** the support and the ceramic membrane together define a hermetic internal chamber (17).

5. Unit comprising a measurement device according to any one of the preceding claims, chosen from the group comprising a motor, in particular a heat engine, a gearbox, a braking device, an air conditioner, a refrigerator and a freezer.
